# EUROPEAN PATENT APPLICATION

(11) **EP 4 465 378 A1**
(43) Date of publication of application: **20.11.2024**
(21) Application number: 23213593.9
(22) Date of filing: 01.12.2023
(51) Int. Cl.: H01M 4/131, H01M 4/36, H01M 4/505, H01M 4/58, H01M 4/62

(54) **POSITIVE ELECTRODE ACTIVE MATERIAL COMPOSITION AND APPLICATION THEREOF**

(30) Priority: 15.05.2023 CN 202310544246
(71) Applicant: AESC Dynamics Technology (Jiangsu) Ltd., 214443 Wuxi City, Jiangsu Province (CN); AESC Dynamics Technology (Hubei) Ltd., Shiyan, Hubei Province 442002 (CN); AESC Dynamics Technology (Ordos) Ltd., Ordos, Inner Mongolia Autonomous Region 017200 (CN); AESC Intelligent Innovation Dynamics Technology (Shanghai) Ltd., Shanghai 201315 (CN)
(72) Inventor: WU, Guanhong, Pudong New Area Shanghai, 201315 (CN); WANG, Wenxu, Pudong New Area Shanghai, 201315 (CN); MO, Fangjie, Pudong New Area Shanghai, 201315 (CN); WANG, Yunhui, Pudong New Area Shanghai, 201315 (CN); LIU, Huyun, Pudong New Area Shanghai, 201315 (CN); YANG, Wenlong, Pudong New Area Shanghai, 201315 (CN); SUN, Huayu, Pudong New Area Shanghai, 201315 (CN)
(74) Representative: Becker, Eberhard

(57) **Abstract**

The present invention provides a positive electrode active material composition and application thereof. The positive electrode active material composition includes at least the following ingredients: an ingredient A as a first active substance; an ingredient B as a second active substance; the particle size distributions of the first active substance and the second active substance satisfy: the ratio D_{Amin}/D_{Bmin} of Dₘᵢₙ is 0.25 to 1.5, the ratio D_{A10}/D_{B10} of Dio is 0.1 to 0.6, the ratio D_{A50}/D_{B50} of D₅₀ is 0.1 to 0.35, the ratio D_{A90}/D_{B90} of D₉₀ is 0.12 to 0.67, and 0.2≤[(D_{A90}-D_{A10})/D_{A50}]/[(D_{B90}-D_{B10})/D_{B50}]≤13. The invention provides a positive electrode active material composition and application thereof, which may effectively improve the volumetric energy density of lithium-ion secondary batteries.

## Description

### BACKGROUND

### Technical Field

The disclosure relates to the technical field of lithium-ion batteries, in particular to a positive electrode active material composition and application thereof.

### Description of Related Art

Olivine-type positive electrode materials may be derived from a wide range of sources, and are characterized in low cost and high theoretical capacity. However, the energy density of olivine-type materials such as lithium iron phosphate and lithium manganese iron phosphate is much lower than that of other types of positive electrode materials, such as ternary positive electrode materials and lithium-rich manganese-based materials. In the meantime, the hightemperature cycle performance of olivine-type materials is poor.

Lithium-rich manganese-based materials have received a lot of attention because of their high discharge specific capacity, low production cost, and environmental friendliness. However, the low-temperature performance and electrical conductivity of lithium-rich manganese-based materials are poor, which limits the application of lithium-rich manganese-based materials.

Moreover, the compaction density of olivine-type materials such as lithium manganese iron phosphate and lithium-rich manganese-based materials is lower than that of conventional ternary materials, which will lead to low compaction density of pole pieces prepared by using lithium iron manganese phosphate and lithium-rich manganese-based materials, which in turn results in a low volumetric energy density of the battery.

### SUMMARY

The present disclosure provides a positive electrode active material composition and application thereof, which may improve the conductivity and rate performance of lithium-ion secondary batteries, while effectively improve the compaction density of positive electrode pole pieces, thereby increasing the volumetric energy density of lithium-ion secondary batteries.

In order to solve the technical problems described above, the present disclosure is realized through the following technical solutions:

The present disclosure provides a positive electrode active material composition, including the following ingredients:
an ingredient A as a first active substance;
an ingredient B as a second active substance;
wherein the particle size distributions of the first active substance and the second active substance satisfy: the ratio D_{Amin}/D_{Bmin} of Dₘᵢₙ is 0.25 to 1.5, the ratio D_{A10}/D_{B10} of D₁₀ is 0.1 to 0.6, the ratio D_{A50}/D_{B50} of D₅₀ is 0.1 to 0.35, the ratio D_{A90}/D_{B90} of D₉₀ is 0.12 to 0.67, and 0.2≤[(D_{A90}-D_{A10})/D_{A50}]/[(D_{B90}-D_{B10})/D_{B50}]≤13.

In an embodiment of the present disclosure, the mass ratio of the first active substance to the second active substance is 50:50 to 90:10.

In an embodiment of the present disclosure, the general chemical formula of the first active substance is formula I, and formula I is LiₐMnₓFe_{1-x-y}G_{y}PO₄, where 0.9≤a≤1.10, 0≤x≤1.0, 0≤y≤0.02, 0.5≤x/(1-x-y)≤0.9, element G is any one or more of Ti, Mg, Ni, Co, Al, V, Cr, Zr or Nb.

In an embodiment of the present disclosure, the doping amount of the element G is 2000 ppm to 5000 ppm.

In an embodiment of the present disclosure, the general chemical formula of the second active substance is formula II, and formula II is Li_{1+(b/(2+b))}Mn_{2b/(2+b)}M_{(6/(2+b))-2}O₂, where 0.5≤b≤1, and the element M is any one or more of Ni, Co, Mn, Mg, Al, Ti, Zr, Nb, La, Sr or W.

In an embodiment of the present disclosure, the doping amount of the element M is 2000 ppm to 5000 ppm.

In an embodiment of the present disclosure, the surface of the first active substance is coated with a carbon layer, and the amount of the carbon coating is 1% to 3% of the mass of the first active substance.

The present disclosure also provides a positive electrode pole piece, which includes the above-mentioned positive electrode active material composition.

In an embodiment of the present disclosure, the compaction density of the positive electrode pole piece is 2.47 g/cm³ to 2.79 g/cm³.

The present disclosure further provides a lithium-ion secondary battery, which includes the positive electrode pole piece mentioned above.

The present disclosure further provides an electrochemical device, which includes the above-mentioned lithium-ion secondary battery.

In summary, the present disclosure provides a positive electrode active material composition and application thereof, which may effectively improve the compaction density of positive electrode pole piece, increase the volumetric energy density of lithium-ion secondary batteries, and improve the conductivity and ion conductivity of lithium-ion secondary batteries, thereby improving the rate performance and cycle performance of lithium-ion secondary batteries.

### BRIEF DESCRIPTION OF THE DRAWINGS

In order to more clearly illustrate the technical solutions in the embodiments of the present disclosure or the related art, the following description will briefly introduce the accompanying drawings that need to be used in the description of the embodiments or the related art. Clearly, the drawings in the following description are only some embodiments of the present disclosure, and those skilled in the art can obtain other drawings according to these drawings without any creative effort.
FIG. 1 is a schematic structural view of a lithium-ion secondary battery in an embodiment of the present disclosure.
FIG. 2 is a cycle performance diagram of lithium batteries in Example 1 of the present disclosure and Comparative Example 1.

### REFERENCE SIGNS LIST

100: positive electrode pole piece
200: separator
300: negative electrode pole piece
400: electrolyte

### DESCRIPTION OF THE EMBODIMENTS

The implementation of the present disclosure is described below through specific examples, and those skilled in the art may easily understand other advantages and effects of the present disclosure from the content disclosed in this specification. The disclosure may also be implemented or applied through other different specific implementation modes, and the details in this specification may also be modified or changed based on different viewpoints and applications without departing from the spirit of the disclosure.

It should be understood that the disclosure may be embodied in different forms and should not be construed as limited to the embodiments set forth herein. Rather, these embodiments are provided so that this disclosure will be thorough and complete, and will fully convey the scope of the disclosure to those skilled in the art. Unless otherwise specified, "%" and "part" shown in the following examples mean "mass%" and "parts by mass", respectively.

The technical solutions of the present disclosure will be described in further detail below in conjunction with several embodiments and accompanying drawings. Clearly, the described embodiments are only part of the embodiments of the present disclosure, not all of them. Based on the embodiments of the present disclosure, all other embodiments obtained by persons of ordinary skill in the art without making creative efforts belong to the protection scope of the present disclosure.

Characterized in low price and high specific capacity, lithium transition metal oxide is a promising positive electrode active material for lithium batteries. Lithium-ion secondary batteries made of lithium transition metal oxides are widely used in mobile phones, tablet PCs, laptops and digital cameras and other portable electronic products, as well as vehicles such as electric bicycles and electric vehicles. The disclosure provides a positive electrode active material composition and application thereof, which may improve the volumetric energy density and rate performance of batteries, and may be applied to various electronic products and the field of electric vehicles.

The present disclosure provides a positive electrode active material composition, including an ingredient A and an ingredient B. The ingredient A is the first active substance, the ingredient B is the second active substance, and the ratio D_{A50}/D_{B50} of the median particle diameter D₅₀ of the first active substance and the second active substance is, for example, 0.1 to 0.35. Further, the ratio D_{A50}/D_{B50} of the median particle diameter D₅₀ of the first active substance and the second active substance is, for example, 0.2 to 0.3. When the ratio of the median particle diameter D₅₀ is within this range, the particle gradation effect between the first active substance and the second active substance is the most limiting, thereby ensuring that the prepared positive electrode pole piece has high compaction density. The particle size distribution of the first active substance satisfies that D_{Amin} is 0.1 µm to 0.3 µm, D_{A10} is 0.3 µm to 0.6 µm, D_{A50} is 0.7 µm to 2.5 µm, and D_{A90} is 3.0 µm to 10 µm. The particle size distribution of the second active substance satisfies that D_{Bmin} is 0.2 µm to 0.4 µm, D_{B10} is 1 µm to 3 µm, D_{B50} is 7 µm to 11 µm, and D_{B90} is 15 µm to 25 µm. The ratio of the particle size of the first active substance to the second active substance satisfies the ratio D_{Amin}/D_{Bmin} of Dₘᵢₙ is 0.25 to 1.5, the ratio D_{A10}/D_{B10} of D₁₀ is 0.1 to 0.6, the ratio D_{A50}/D_{B50} of D₅₀ is 0.1 to 0.35, the ratio D_{A90}/D_{B90} of D₉₀ is 0.12 to 0.67, and 0.2≤[(Dₐ₉₀-D_{A10})/D_{A50}]/[(D_{B90}-D_{B90})/D_{B50}]≤13. Within the above range, the particle size design of the two active materials is more reasonable, thereby achieving better compaction density and rate performance.

In an embodiment of the present disclosure, the first active substance is, for example, selected from lithium manganese iron phosphate (LMFP) material, and the general chemical formula of the first active substance is formula I, and formula I is, for example, LiₐMnₓFe_{1-x-y}G_{y}PO₄, where 0.9≤a≤1.10, 0≤x≤1.0, 0≤y≤0.02, 0.5≤x/(1-x-y)≤0.9, element G is, for example, any one or more of Ti, Mg, Ni, Co, Al, V, Cr , Zr or Nb, etc. The element G helps to improve the electrical conductivity and ion conductivity of the first active substance, thereby improving the rate performance of the lithium-ion secondary battery. Further, the doping amount of element G is 2000 ppm to 5000 ppm, and the doping amount of element G is defined as the ratio of the mass of element G to the total mass of elements Mn, Fe and G. If the content of element G is too low, the effect of improving the rate performance of the lithium-ion secondary battery is not obvious, and if the content of element G is too high, the active sites will be reduced, and the energy density of the lithium-ion secondary battery will be decreased.

In an embodiment of the present disclosure, for example, a carbon (C) layer is coated on the surface of the first active substance, and the amount of carbon coating is, for example, 1% to 3% of the mass of the first active substance. Further, the amount of carbon coating is, for example, 1.2% to 2% of the mass of the first active substance. When the amount of carbon coating is within the above range, the conductivity of the first active substance may be improved, thereby improving the rate performance of the battery. In the meantime, the dissolution of Mn in the first active substance may be reduced, thereby improving the cycle performance of the battery. If the amount of carbon coating is too low and less than 1% of the mass of the first active substance, the coating effect will be poor and the dissolution of Mn may not be effectively blocked. If the amount of carbon coating is too high and higher than 3% of the mass of the first active substance, the active sites will be reduced. In an embodiment of the present disclosure, one or more uniform carbon (C) layers are coated on the surface of the first active substance, and the area of the first active substance covered by the carbon layer is 100% of the surface area of the first active substance. In other embodiments, the area of the first active substance covered by the carbon layer may also be less than 100% of the surface area of the first active substance. In this embodiment, the first active substance is selected from LiMn_{0.6}Fe_{0.4}PO₄@C, for example, and the amount of carbon coating is 2% of the mass of LiMn_{0.6}Fe_{0.4}PO₄.

In an embodiment of the present disclosure, the second active substance includes, for example, lithium-rich manganese-based materials (LMRO). The general chemical formula of the second active substance is formula II, and formula II is, for example, Li_{1+(b/(2+b))}Mn_{2b/(2+b)}M_{(6/(2+b))-2}O₂, where 0.5≤b≤1, and element M is any one or more of Ni, Co, Mn, Mg, Al, Ti, Zr, Nb, La, Sr or W. The element M helps to improve the electrical conductivity and ion conductivity of the second active substance, thereby improving the rate performance of the lithium-ion secondary battery. Further, the doping amount of element M is 2000 ppm to 5000 ppm, and the doping amount of element M is defined as the ratio of the mass of element M to the total mass of elements Mn and M. If the content of the element M is too low, the effect of improving the rate performance of the lithium-ion secondary battery is not obvious; if the content of the element M is too high, the active sites will be reduced, and the energy density of the lithium-ion secondary battery will be decreased. In this embodiment, the second active substance is selected from Li_{1.1}Mn_{0.6}Ni_{0.4}O₂, for example.

In an embodiment of the present disclosure, the mass ratio of the first active substance to the second active substance is, for example, 50:50 to 90:10. The first active substance and the second active substance are mixed to form secondary particles, which may improve the liquid retention of the positive electrode pole piece, thereby improving the rate performance of the lithium-ion secondary battery. In the meantime, the first active substance may significantly increase the conductivity of the second active substance, and the second active substance may increase the compaction density of the first active substance. When the first active substance and the second active substance are blended at the above mass ratio, the compaction density of the prepared positive electrode pole piece is the highest, and meanwhile the rate performance is optimal.

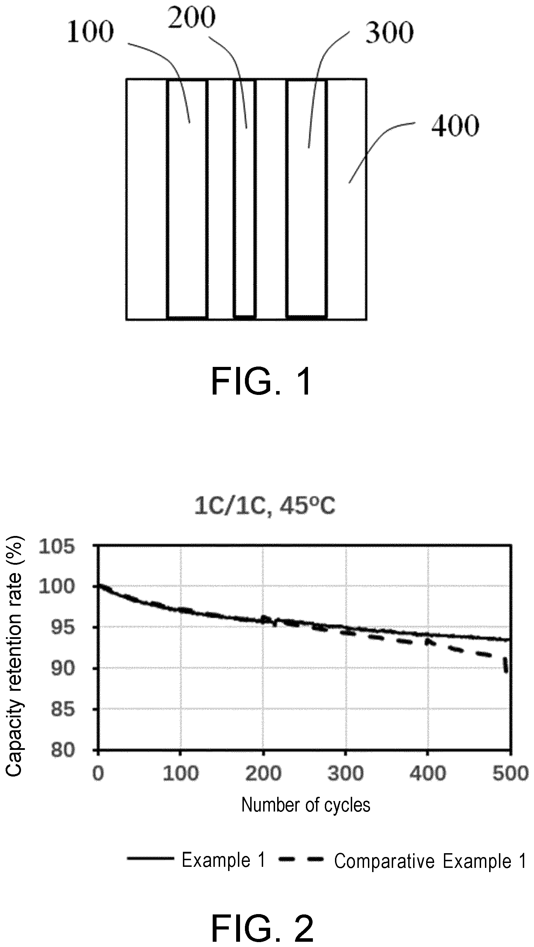

Please refer to FIG. 1, the present disclosure also provides a positive electrode pole piece, which includes the above-mentioned positive electrode active material composition. In an embodiment of the present disclosure, the positive electrode pole piece 100 includes a positive current collector, a conductive agent, a binder, and the positive electrode active material mentioned above. The positive current collector may be selected from an aluminum foil, a nickel current collector or a composite current collector, for example. The conductive agent is, for example, selected from any one or more of conductive carbon black (Super P, SP), acetylene black, carbon nanotube (CNT) and graphene. The binder is, for example, selected from any one or more of polyvinylidene fluoride (PVDF), polyamide (PA), polyacrylonitrile (PAN), polyacrylate, polyvinylether, polymethyl methacrylate (PMMA), polyhexafluoropropylene or polymerized styrene butadiene rubber (SBR).

Please refer to FIG. 1, in this embodiment, the positive current collector is selected from the aluminum foil, the conductive agent is selected from SP, the binder is selected from PVDF, the positive electrode active material is selected from LiMn_{0.6}Fe_{0.4}PO₄@C and Li_{1.1}Mn_{0.6}Ni_{0.4}O₂. In this example, 85% of LiMn_{0.6}Fe_{0.4}PO₄@C with a median particle diameter D_{A50} of 0.8 µm was mixed with 15% of Li_{1.1}Mn_{0.6}Ni_{0.4}O₂ with a median particle diameter D_{B50} of 8 µm to form secondary spherical particles. After mixing the spherical particles, SP and PVDF, for example, according to a weight ratio of 97:1.5: 1.5, NMP was added, and the system was stirred under the action of a vacuum mixer until the system was uniform to obtain a positive electrode slurry. The positive electrode slurry was evenly coated on the aluminum foil, and the aluminum foil was placed in a blast drying oven, and dried at 120°C for 10 minutes, and the dried pole piece was rolled and cut to make the positive electrode pole piece 100.

Please refer to FIG. 1, the present disclosure also provides a lithium-ion secondary battery, which may be applied to various electronic devices. Lithium-ion secondary battery includes the positive electrode pole piece 100, a separator 200, a negative electrode pole piece 300 and an electrolyte 400. The positive electrode pole piece 100 and the negative electrode pole piece 300 are positioned at both sides of the separator 200, the positive electrode pole piece 100, the separator 200 and the negative electrode pole piece 300 are soaked in the electrolyte 400.

Please refer to FIG. 1, in an embodiment of the present disclosure, a negative electrode pole piece 300 includes a negative current collector, a conductive agent, a binder, and a negative active material. The negative current collector may be selected from copper foil and the like, for example. The conductive agent is, for example, selected from any one or more of conductive carbon black (Super P, SP), acetylene black, carbon nanotube (CNT) and graphene. The binder is, for example, selected from any one or more of polyvinylidene fluoride (PVDF), polyamide (PA), polyacrylonitrile (PAN), polyacrylate, polyvinylether, polymethyl methacrylate (PMMA), polyhexafluoropropylene or polymerized styrene butadiene rubber (SBR). The negative active material is any one or more of natural graphite, artificial graphite, crystalline carbon, amorphous carbon or carbon composite material.

Please refer to FIG. 1, in the present embodiment, the negative electrode active material is, for example, selected from artificial graphite; the conductive agent is, for example, selected from SP; the binder is, for example, selected from styrene butadiene rubber; and the thickener is, for example, selected from sodium carboxymethyl cellulose. In this embodiment, artificial graphite, conductive carbon black, sodium carboxymethyl cellulose and styrene butadiene rubber were mixed in a mass ratio of 96:1:1:2, for example, deionized water was added, and the negative electrode slurry was obtained under the action of a vacuum mixer slurry. The negative electrode slurry was evenly coated on the copper foil of the negative current collector, the copper foil was placed in a blast drying oven and dried at 120°C for 10 minutes, and the dried pole piece was rolled and cut to prepare the negative electrode pole piece 300.

Please refer to FIG. 1, in an embodiment of the present disclosure, the separator 200 is selected from, for example, a polyethylene (PE) film or a polypropylene (PP) film. The thickness of the separator 200 is, for example, 9 µm to 18 µm, the air permeability is, for example, 180 s/100 mL to 380 s/100 mL, and the porosity is, for example, 30% to 50%.

Please refer to FIG. 1, in an embodiment of the present disclosure, the electrolyte 400 includes, for example, lithium salts and organic solvents. Lithium salts are, for example, selected from any one or more of lithium hexafluorophosphate (LiPF₆), lithium difluorophosphate (LiPO₂F₂), lithium bis(fluorosulfonyl)imide (LiFSi), lithium tetrafluoroborate (LiBF₄), lithium difluoro(oxalato)borate(1-) (LiDFOB) or lithium bis(oxalate)borate (LiBOB). In this embodiment, the lithium salt is selected from LiPF₆, for example. In an embodiment of the present disclosure, the content of the lithium salt accounts for, for example, 4 wt % to 24 wt % of the total mass of the electrolytic 400 , and the content of the organic solvent accounts for, for example, 96 wt % to 76 wt % of the total mass of the electrolytic 400. The organic solvent is selected from any one or more of ethylene carbonate (EC), dimethyl carbonate (DMC), ethyl methyl carbonate (EMC), diethyl carbonate (DEC) or polycarbonate (PC).

Please refer to FIG. 1, in an embodiment of the present disclosure, the positive electrode pole piece 100, the separator 200 and the negative electrode pole piece 300 were sequentially laminated so that the separator 200 was positioned between the positive electrode and negative electrode for isolation. Then, the laminated sheet was wrapped with an aluminum-plastic film, and transferred to a vacuum oven for drying at 100°C to 130°C. The electrolyte 400 was injected and sealing was performed, and the amount of injected electrolyte was, for example, 3.0 g/Ah. After liquid injection, after 4.5V formation and aging process, a pouch battery with a capacity of 1 Ah was finally prepared, that is, a lithium-ion secondary battery.

Hereinafter, the present disclosure will be explained more specifically by referring to examples, which should not be construed as limiting. Appropriate modifications may be made within the range consistent with the gist of the present disclosure, and all of them fall within the technical scope of the present disclosure.

### Example 1

Preparation of positive electrode active material composition: 85% of LiMn_{0.6}Fe_{0.4}PO₄@C with a median particle size D_{A50} of 0.8 µm and 15% of Li_{1.1}Mn_{0.6}Ni_{0.4}O₂ with a median particle size D_{B50} of 8 µm were mixed to form secondary spherical particles.

Preparation of positive electrode: After the above positive electrode active material composition, SP and PVDF were mixed according to the weight ratio of 97:1.5:1.5, NMP was added thereto, and the system was stirred under the action of a vacuum mixer until the system was uniform to obtain positive electrode slurry. The positive electrode slurry was evenly coated on the aluminum foil, the aluminum foil was placed in a blast drying oven, and dried at 120°C for 10 minutes, the dried pole piece were rolled and cut to make positive electrode pole piece.

Preparation of lithium-ion secondary battery: The above-mentioned positive electrode pole piece, the separator and the negative electrode pole piece were sequentially laminated, the laminated sheet was coated with an aluminum-plastic film, and the electrolyte was injected and sealing was performed. After 4.5V formation and aging process, a pouch battery with a capacity of 1 Ah was finally prepared, that is, a lithium-ion secondary battery.

### Example 2

The median particle diameter D_{A50} of LiMn_{0.6}Fe_{0.4}PO₄@C was changed to 1 µm, and other operation steps are the same as in Example 1.

### Example 3

The median particle diameter D_{A50} of LiMn_{0.6}Fe_{0.4}PO₄@C was changed to 1.2 µm, and other operation steps are the same as in Example 1.

### Example 4

The median particle diameter D_{A50} of LiMn_{0.6}Fe_{0.4}PO₄@C was changed to 0.4 µm, and other operation steps are the same as in Example 1.

### Example 5

The median particle diameter D_{A50} of LiMn_{0.6}Fe_{0.4}PO₄@C was changed to 2 µm, and other operation steps are the same as in Example 1.

### Example 6

The median particle diameter D_{A50} of LiMn_{0.6}Fe_{0.4}PO₄@C was changed to 2.5 µm, and other operation steps are the same as in Example 1.

### Example 7

The median particle diameter D_{A50} of LiMn_{0.6}Fe_{0.4}PO₄@C was changed to 0.3 µm, and other operation steps are the same as in Example 1.

### Example 8

The median particle diameter D_{A50} of LiMn_{0.6}Fe_{0.4}PO₄@C was changed to 2.9 µm, and other operation steps are the same as in Example 1.

### Example 9

The median particle diameter D_{B50} of Li_{1.1}Mn_{0.6}Ni_{0.4}O₂ was changed to 7 µm, and other operation steps are the same as in Example 1.

### Example 10

The median particle diameter D_{B50} of Li_{1.1}Mn_{0.6}Ni_{0.4}O₂ was changed to 11 µm, and other operation steps are the same as in Example 1.

### Example 11

The median particle diameter D_{B50} of Li_{1.1}Mn_{0.6}Ni_{0.4}O₂ was changed to 4 µm, and other operation steps are the same as in Example 1.

### Example 12

The median particle diameter D_{B50} of Li_{1.1}Mn_{0.6}Ni_{0.4}O₂ was changed to 15 µm, and other operation steps are the same as in Example 1.

### Example 13

The median particle diameter D_{B50} of Li_{1.1}Mn_{0.6}Ni_{0.4}O₂ was changed to 22 µm, and other operation steps are the same as in Example 1.

### Example 14

The median particle diameter D_{B50} of Li_{1.1}Mn_{0.6}Ni_{0.4}O₂ was changed to 18 µm, and other operation steps are the same as in Example 1.

### Example 15

The mass ratio of LiMn_{0.6}Fe_{0.4}PO₄@C to Li_{1.1}Mn_{0.6}Ni_{0.4}O₂ was changed to 70%:30%, and other operation steps are the same as in Example 1.

### Example 16

The mass ratio of LiMn_{0.6}Fe_{0.4}PO₄@C to Li_{1.1}Mn_{0.6}Ni_{0.4}O₂ was changed to 60%:40%, and other operation steps are the same as in Example 1.

### Example 17

The mass ratio of LiMn_{0.6}Fe_{0.4}PO₄@C to Li_{1.1}Mn_{0.6}Ni_{0.4}O₂ was changed to 50%:50%, and other operation steps are the same as in Example 1.

### Example 18

The mass ratio of LiMn_{0.6}Fe_{0.4}PO₄@C to Li_{1.1}Mn_{0.6}Ni_{0.4}O₂ was changed to 90%: 10%, and other operation steps are the same as in Example 1.

### Comparative Example 1

The mass ratio of LiMn_{0.6}Fe_{0.4}PO₄@C to Li_{1.1}Mn_{0.6}Ni_{0.4}O₂ was changed to 49%:51%, and other operation steps are the same as in Example 1.

### Comparative Example 2

The mass ratio of LiMn_{0.6}Fe_{0.4}PO₄@C to Li_{1.1}Mn_{0.6}Ni_{0.4}O₂ was changed to 91%:9%, and other operation steps are the same as in Example 1.

### Comparative Example 3

The positive electrode active material was LiMn_{0.6}Fe_{0.4}PO₄@C with a median particle size D₅₀ of 0.8 µm, and other operation steps are the same as in Example 1.

### Comparative Example 4

The positive electrode active material was Li_{1.1}Mn_{0.6}Ni_{0.4}O₂ with a median particle size D₅₀ of 8 µm, and other operation steps are the same as in Example 1.

The compaction density test of pole piece is to roll the positive electrode pole piece under 12 MPa to test the compaction density of the positive electrode pole piece.

The cycle test was to charge and discharge 500 cycles at 1C at 45°C in the range of 2.5 V to 4.2 V, and record the capacity ratio of the 500th cycle to the first cycle as the capacity retention rate thereof.

The rate performance test was to test the rate discharge performance (capacity retention rate) in the voltage range of 2.5 V to 4.2 V and under the conditions of current density of 3C and 1/3C respectively.

The low-temperature capacity retention rate was to perform charging at 1C constant current and constant voltage to 4.2 V (cut-off current 0.05C) at 25°C, and then perform discharging at 1C constant current to 2.0 V. Then charging was performed again at 1C constant current and constant voltage at 25°C to 4.2V (cut-off current 0.05C), and then the battery cell was placed at - 20°C and discharge at 1C to 2.0V, the ratio of the discharge capacity to the 1C discharge capacity at 25°C is the low-temperature capacity retention rate.

The compaction density of the positive electrode pole piece in various examples and various comparative examples was tested, and the positive electrode pole piece was prepared into a lithium-ion secondary battery, and the performance of the lithium-ion secondary battery was tested. The test results are shown in Table 1.

**Table 1 Performance of lithium-ion secondary batteries in various examples and various comparative examples**

| | First active substance | D_{A50} (µm) | Second active substance | D_{B50} (µm) | D_{A50}/ D_{B50} | Mass ratio (%) | Compaction density (g/cm³) | Rate performance |
|---|---|---|---|---|---|---|---|---|
| Example 1 | LiMn_{0.6}Fe_{0.4}PO₄ @C | 0.8 | Li_{1.2}Mn_{0.6}Ni_{0.2}O₂ | 8 | 0.10 | 85:15 | 2.55 | 93.7% |
| Example 2 | LiMn_{0.6}Fe_{0.4}PO₄ @C | 1 | Li_{1.2}Mn_{0.6}Ni_{0.2}O₂ | 8 | 0.13 | 85:15 | 2.58 | 93.5% |
| Example 3 | LiMn_{0.6}Fe_{0.4}PO₄ @C | 1.2 | Li_{1.2}Mn_{0.6}Ni_{0.2}O₂ | 8 | 0.15 | 85:15 | 2.56 | 93.3% |
| Example 4 | LiMn_{0.6}Fe_{0.4}PO₄ @C | 0.4 | Li_{1.2}Mn_{0.6}Ni_{0.2}O₂ | 8 | 0.05 | 85:15 | 2.52 | 93.6% |
| Example 5 | LiMn_{0.6}Fe_{0.4}PO₄ @C | 2 | Li_{1.2}Mn_{0.6}Ni_{0.2}O₂ | 8 | 0.25 | 85:15 | 2.53 | 92.5% |
| Example 6 | LiMn_{0.6}Fe_{0.4}PO₄ @C | 2.5 | Li_{1.2}Mn_{0.6}Ni_{0.2}O₂ | 8 | 0.31 | 85:15 | 2.50 | 92.0% |
| Example 7 | LiMn_{0.6}Fe_{0.4}PO₄ @C | 0.3 | Li_{1.2}Mn_{0.6}Ni_{0.2}O₂ | 8 | 0.04 | 85:15 | 2.47 | 93.0% |
| Example 8 | LiMn_{0.6}Fe_{0.4}PO₄ @C | 2.9 | Li_{1.2}Mn_{0.6}Ni_{0.2}O₂ | 8 | 0.36 | 85:15 | 2.48 | 91.4% |
| Example 9 | LiMn_{0.6}Fe_{0.4}PO₄ @C | 0.8 | Li_{1.2}Mn_{0.6}Ni_{0.2}O₂ | 7 | 0.11 | 85:15 | 2.56 | 93.7% |
| Example 10 | LiMn_{0.6}Fe_{0.4}PO₄ @C | 0.8 | Li_{1.2}Mn_{0.6}Ni_{0.2}O₂ | 11 | 0.07 | 85:15 | 2.54 | 93.8% |
| Example 11 | LiMn_{0.6}Fe_{0.4}PO₄ @C | 0.8 | Li_{1.2}Mn_{0.6}Ni_{0.2}O₂ | 4 | 0.20 | 85:15 | 2.52 | 93.5% |
| Example 12 | LiMn_{0.6}Fe_{0.4}PO₄ @C | 0.8 | Li_{1.2}Mn_{0.6}Ni_{0.2}O₂ | 15 | 0.05 | 85:15 | 2.51 | 93.6% |
| Example 13 | LiMn_{0.6}Fe_{0.4}PO₄ @C | 0.8 | Li_{1.2}Mn_{0.6}Ni_{0.2}O₂ | 2.2 | 0.36 | 85:15 | 2.48 | 93.3% |
| Example 14 | LiMn_{0.6}Fe_{0.4}PO₄ @C | 0.8 | Li_{1.2}Mn_{0.6}Ni_{0.2}O₂ | 18 | 0.04 | 85:15 | 2.48 | 93.2% |
| Example 15 | LiMn_{0.6}Fe_{0.4}PO₄ @C | 0.8 | Li_{1.2}Mn_{0.6}Ni_{0.2}O₂ | 8 | 0.10 | 70:30 | 2.63 | 93.0% |
| Example 16 | LiMn_{0.6}Fe_{0.4}PO₄ @C | 0.8 | Li_{1.2}Mn_{0.6}Ni_{0.2}O₂ | 8 | 0.10 | 60:40 | 2.71 | 92.0% |
| Example 17 | LiMn_{0.6}Fe_{0.4}PO₄ @C | 0.8 | Li_{1.2}Mn_{0.6}Ni_{0.2}O₂ | 8 | 0.10 | 50:50 | 2.79 | 91.0% |
| Example 18 | LiMn_{0.6}Fe_{0.4}PO₄ @C | 0.8 | Li_{1.2}Mn_{0.6}Ni_{0.2}O₂ | 8 | 0.10 | 90:10 | 2.48 | 93.6% |
| Comparati -ve Example 1 | LiMn_{0.6}Fe_{0.4}PO₄ @C | 0.8 | Li_{1.2}Mn_{0.6}Ni_{0.2}O₂ | 8 | 0.10 | 49:51 | 2.80 | 90.1% |
| Comparati -ve Example 2 | LiMn_{0.6}Fe_{0.4}PO₄ @C | 0.8 | Li_{1.2}Mn_{0.6}Ni_{0.2}O₂ | 8 | 0.10 | 91:9 | 2.44 | 93.6% |
| Comparati -ve Example 3 | LiMn_{0.6}Fe_{0.4}PO₄ @C | 0.8 | \ | \ | \ | \ | 2.30 | 93.5% |
| Comparati -ve Example 4 | \ | \ | Li_{1.2}Mn_{0.6}Ni_{0.2}O₂ | 8 | \ | \ | 3.08 | 86.7% |

Please refer to Table 1, combined with Example 1 and Comparative Examples 3 to 4, in Comparative Example 3, the positive electrode active material was LiMn_{0.6}Fe_{0.4}PO₄@C, the rate performance of the battery was 93.5%, but the compaction density of the pole piece was only 2.30 g/cm³, the positive electrode active material in Comparative Example 4 was Li_{1.2}Mn_{0.6}Ni_{0.2}O₂, and the compaction density of the pole piece was only 3.08 g/cm³, but the rate performance of the battery was only 86.7%. That is, if LiMn_{0.6}Fe_{0.4}PO₄@C is used alone, there are problems such as low compaction density of the pole piece, resulting in a low volumetric energy density of the battery. If Li_{1.2}Mn_{0.6}Ni_{0.2}O₂ is used alone, the problem of poor conductivity occurs, which results in poor battery rate performance. In Example 1, the above two materials are combined, the compaction density of the pole piece was 2.55 g/cm³, and the rate performance of the battery was 93.7%, which ensures that the pole piece has a higher compaction density, thereby improving the volumetric energy density of the battery, and the rate performance of the battery is also improved.

Please refer to FIG. 2 and Table 1, and compare the mass ratios of LiMn_{0.6}Fe_{0.4}PO₄@C to Li_{1.2}Mn_{0.6}Ni_{0.2}O₂ in combination with Example 1, Examples 15 to 20 and Comparative Examples 1 to 2. According to FIG. 1, in Example 1, the mass ratio of LiMn_{0.6}Fe_{0.4}PO₄@C to Li_{1.2}Mn_{0.6}Ni_{0.2}O₂ was 85%:15%, and the capacity retention rate of the prepared lithium battery after 500 cycles was 93.7 %, while in Comparative Example 1, the content of LiMn_{0.6}Fe_{0.4}PO₄@C was greatly reduced, and the mass ratio of LiMn_{0.6}Fe_{0.4}PO₄@C to Li_{1.2}Mn_{0.6}Ni_{0.2}O₂ became 49%:51%. The capacity retention rate of the prepared lithium battery was only 90.1% after 500 cycles, and in Comparative Example 2, the content of LiMn_{0.6}Fe_{0.4}PO₄@C was greatly increased, and the mass ratio of LiMn_{0.6}Fe_{0.4}PO₄@C to Li_{1.2}Mn_{0.6}Ni_{0.2}O₂ became 91%:9%. Although the rate performance of the lithium battery may be maintained at 93.6%, the compaction density of the pole piece was only 2.44 g/cm³. In Examples 15 to 18, the mass ratio of LiMn_{0.6}Fe_{0.4}PO₄@C to Li_{1.2}Mn_{0.6}Ni_{0.2}O₂ was in the range of 50%: 50% to 90%: 10%, and the compaction density of the pole piece was higher, the highest compaction density reached 2.78 g/cm³, while the rate performance was the optimal and up to 93.6%. Further, in combination with Examples 1 to 14, the median particle size D₅₀ of LiMn_{0.6}Fe_{0.4}PO₄@C was 0.7 µm to 2.5 µm, the median particle size D₅₀ of Li_{1.2}Mn_{0.6}Ni_{0.2}O₂ was 7 µm to 11 µm, and the ratio of D₅₀ of LiMn_{0.6}Fe_{0.4}PO₄@C to Li_{1.2}Mn_{0.6}Ni_{0.2}O₂ was 0.1 to 0.35, the particle gradation effect between LiMn_{0.6}Fe_{0.4}PO₄@C and Li_{1.2}Mn_{0.6}Ni_{0.2}O₂ is the most limiting, thereby ensuring that the pole piece has high compaction density, and the rate performance of the battery is improved.

Please refer to Table 1, the positive electrode active material composition provided by the present disclosure has a good gradation effect between particles. By preparing the positive electrode active material composition into positive electrode pole piece, the compaction density of positive electrode pole piece may reach 2.47 g/cm³ to 2.79 g/cm³, thereby improving the performance of the lithium battery, and the rate performance of the prepared lithium battery may reach 91.0% to 93.7%.

To sum up, the present disclosure provides a positive electrode active material composition and application thereof. By compounding two active materials, the low-temperature performance and electrical conductivity of lithium-ion secondary batteries may be improved. By controlling the median particle size ratio of the two active materials within the range of 0.1 to 0.35, the gradation effect of the two particles is improved, thereby effectively improving the compaction density of the pole piece, and thus increasing the volumetric energy density of the lithium-ion secondary battery. Moreover, by doping the two active materials with metal ions, the electrical conductivity and ion conductivity of the positive electrode material are improved, thereby improving the rate performance and cycle performance of the lithium ion secondary battery.

## Claims

1. A positive electrode active material composition, comprising the following ingredients:
an ingredient A as a first active substance;
an ingredient B as a second active substance;
wherein particle size distributions of the first active substance and the second active substance satisfy: a ratio D_{Amin}/D_{Bmin} of Dₘᵢₙ is 0.25 to 1.5, a ratio D_{A10}/D_{B10} of D₁₀ is 0.1 to 0.6, a ratio D_{A50}/D_{B50} of D₅₀ is 0.1 to 0.35, a ratio D_{A90}/D_{B90} of D₉₀ is 0.12 to 0.67, and 0.2≤[(D_{A90}-D_{A10})/D_{A50}]/[(D_{B90}-D_{B10})/D_{B50}]≤13.

2. The positive electrode active material composition according to claim 1, wherein a mass ratio of the first active substance to the second active substance is 50:50 to 90: 10.

3. The positive electrode active material composition according to claim 1, wherein a general chemical formula of the first active substance is a formula I, and the formula I is LiₐMnₓFe_{1-x-y}G_{y}PO₄, wherein 0.9≤a≤1.10, 0≤x≤1.0, 0≤y≤0.02, 0.5≤x/(1-x-y)≤0.9, and an element G is any one or more of Ti, Mg, Ni, Co, Al, V, Cr, Zr or Nb.

4. The positive electrode active material composition according to claim 3, wherein a doping amount of the element G is 2000 ppm to 5000 ppm.

5. The positive electrode active material composition according to claim 1, wherein a general chemical formula of the second active substance is a formula II, and the formula II is Li_{1+(b/(2+b))}Mn_{2b/(2+b)}M_{(6/(2+b))-2}O₂, wherein 0.5≤b≤1, and an element M is any one or more of Ni, Co, Mn, Mg, Al, Ti, Zr, Nb, La, Sr or W.

6. The positive electrode active material composition according to claim 5, wherein a doping amount of the element M is 2000 ppm to 5000 ppm.

7. The positive electrode active material composition according to claim 1, wherein a surface of the first active substance is coated with a carbon layer, and an amount of carbon coating is 1% to 3% of a mass of the first active substance.

8. A positive electrode pole piece (100), comprising the positive electrode active material composition according to claim 1.

9. The positive electrode pole piece (100) according to claim 8, wherein a compaction density of the positive electrode pole piece is 2.47 g/cm³ to 2.79 g/cm³.

10. A lithium-ion secondary battery, comprising the positive electrode pole piece (100) according to claim 8.

11. An electrochemical device, comprising the lithium-ion secondary battery according to claim 10.
